(19) Europäisches Patentamt

European Patent Office

Office européen des brevets

(11) **EP 1 835 271 A1**

(12) **EUROPEAN PATENT APPLICATION**

(43) Date of publication:
**19.09.2007 Bulletin 2007/38**

(51) Int Cl.:
*G01L 1/20* (2006.01)   *G01L 1/18* (2006.01)
*H01H 3/14* (2006.01)   *H01H 13/70* (2006.01)
*G06F 3/033* (2006.01)

(21) Application number: **06114542.1**

(22) Date of filing: **24.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.03.2006 LU 91230**

(71) Applicant: **IEE INTERNATIONAL ELECTRONICS & ENGINEERING S.A.**
**6468 Echternach (LU)**

(72) Inventors:
• **Boulbitch, Alexei**
**54295 Trier (DE)**
• **Schoos, Aloyse**
**8094 Bertrange (LU)**

(74) Representative: **Beissel, Jean et al**
**Office Ernest T. Freylinger S.A.,**
**234, route d'Arlon,**
**B.P. 48**
**8001 Strassen (LU)**

(54) **Pressure-actuatable switching device and associated pressure sensor**

(57)    A pressure-actuatable switching device for sensing a compressive force acting thereon comprises a first sheet element and a second sheet element, each one of the first and second sheet elements having a side facing towards the other sheet element and a side facing away from the other sheet element, a pressure sensitive polymer layer arranged between the first and second sheet elements and an evaluation circuit. The pressure sensitive polymer layer is electrically insulating when subjected to pressure not exceeding a certain pressure threshold and electrically conducting when subjected to pressure exceeding the pressure threshold. The evaluation circuit is electrically connected to the pressure sensitive polymer layer in such a way that it can evaluate whether the pressure sensitive polymer layer is electrically insulating or electrically conductive. The first sheet element comprises, on the side facing towards the second sheet element, at least one projection, such that a compressing force acting on the pressure-actuatable switching device is transmitted to the pressure sensitive polymer layer at least preponderantly through the at least one projection.

Fig. 1

## Description

### Technical field

The present invention generally relates to pressure sensors, in particular to pressure-actuatable switching devices for sensing a compressive force acting thereon, based upon intrinsically pressure sensitive polymers.

### Background Art

Pressure-actuatable switching devices based on intrinsically pressure sensitive polymers (hereinafter pressure sensitive polymers) are known in the field of pressure sensors. In "Polymer Films as a Material for Sensors", Sensors and Actuators A, 39 (1993) 1-6, Lachinov discloses a pressure sensor comprising a pressure sensitive polymer film sandwiched between two metallic electrodes arranged on glass plates. The electrodes are connected to an evaluation circuit measuring the resistance of the pressure sensitive polymer film as a function of the applied pressure.

In the following, the term "pressure sensitive polymer layer" designates a layer comprising or consisting essentially of a polymer or a blend of polymers that have an intrinsic electrical conductivity that changes as a function of applied pressure. Such a polymer or blend of polymers is herein referred to as "pressure sensitive polymer". It is worthwhile noting that it is the intrinsic electric conductivity of the pressure sensitive polymer that changes, i.e. the change in conductivity is due to changes on molecular level. This is in contrast to composite pressure-sensitive materials having electrically conductive particles embedded in an insulating matrix material (see e.g. US 3,386,067). In the present context, a layer comprising or consisting essentially of a pressure sensitive polymer designates a layer, whose electrical properties are significantly, respectively essentially determined by the pressure sensitive polymer. A pressure sensitive polymer layer should thus not be limited a priori to a layer consisting exclusively of a pressure sensitive polymer. In addition to pressure sensitive polymer, a pressure sensitive polymer layer may comprise other substances or molecules, e.g. polymers in general, oligomers, monomers, non-polymeric substances such as phenolphthaleine, etc., which may help to adjust the properties of the pressure sensitive polymer layer. The pressure sensitive polymer layer has an electrical conductivity depending upon mechanical stress applied to the layer surface. In most practical applications, such stress is applied normally to the surface of the pressure sensitive polymer layer (i.e. pressure). For reasons of conciseness stress applied to the surface of the pressure sensitive polymer layer is herein generally referred to as "pressure". One should nevertheless keep in mind that components of the stress tensor other than the components normal to the pressure sensitive polymer layer may cause the same effect.

The curve representing the dependence of the conductivity of the pressure sensitive polymer layer upon the applied pressure is generally s-shaped. At low pressure values, the pressure sensitive polymer layer exhibits a low conductivity (typical for insulators) and at high pressure values it exhibits a high conductivity (typical for semiconductors or metals, depending on the pressure sensitive polymer layer under consideration). The conductivity thus increases over 6 to 9 orders of magnitude within a certain pressure interval. It is convenient to characterize this pressure interval by two pressure values, which are herein referred to as "pressure thresholds". Below the lower or first pressure threshold, the pressure sensitive polymer layer has the conductivity of an insulator; above the higher or second pressure threshold, the conductivity of the pressure sensitive polymer layer is that of a semiconductor or a metal. Between the said first and second thresholds, the pressure sensitive polymer layer undergoes a transition between the two conductivity states. Most of the pressure sensitive polymers presently known (such as polydiphenilenephthalide) possess relatively narrow transition intervals, i.e. the difference between the second and the first pressure thresholds is smaller than the value of the first threshold. In this case, the pressure sensitive polymer layer can be characterized by only one pressure threshold, $P_C$, chosen in the middle of the transition interval. In the vicinity of the pressure threshold $P_C$, the conductivity of the pressure sensitive layer varies over 6 to 9 orders of magnitude, so that the conductivity as a function of pressure essentially behaves like a step function. Other pressure sensitive polymers may have a slower transition from the insulating state to the conductive state, i.e. the two thresholds are more spaced on a pressure axis.

An example of a pressure sensitive polymer layer is a film of poly(3,3'-phthalidylidene-4,4'-biphenylene), which, if a pressure greater than the pressure threshold $P_C$ is applied, exhibits high electrical conductivity in thickness direction, whereas the conductivity in the directions parallel to the film remains substantially lower (see e.g. Lachinov, et al. Synthetic Metals 57, 5046-51 (1993); Lachinov et al. Sov. Phys. JETP 75, 99-102 (1992); Lachinov et al. Synthetic Metals 41, 805-809 (1991)). Other pressure sensitive polymers suitable for being used in the present invention have been disclosed e.g. in the patents of Miyadera et al. (JP 2002-241591 A2), Tomono and Komatsu (JP 2004-013451 A2), Yusa and Miyadera (JP 2003317545 A2) and Lachinov and Salazkin (RU 2256967 and WO 2005/076289 A1). Further details can be found in the review articles by A. N. Lachinov et. al., Poly(phthalidylidenarylene)s: New Effects. - New Horizons of application, Synthetic Metals 71, 2155-8 (1995) and S. N. Salazkin, Aromatic polymers based on pseudoacid chlorides, Polymer Science B46, 203-223 (2004). Pressure sensitive polymers materials with different pressure thresholds have been disclosed in reference JP 2002-2415591 A2.

The pressure threshold of a pressure sensitive polymer layer is a material property. Finding a pressure sensitive polymer, however, whose pressure threshold lies within a range defined by the application is not an obvious task. For instance, pressure developed by a human finger when pressing down a button typically lies in a range from 0.03 to 0.1 atm. Pressure-actuatable switching devices used as human-device interfaces are thus preferably able to provide the switching action when a pressure in the above range is applied. For other applications, the switching action might be desired in another pressure range. Usually the pressure range in which the switching action has to occur is fixed and a suitable pressure sensitive polymer layer has then to be found according to this and other technical requirements. In some cases, there might be no pressure sensitive polymer layer compatible with all the conditions.

**Technical problem**

It is an object of the present invention to reduce the gravity of the above-mentioned problem. This is achieved through the provision of a pressure-actuatable switching device as claimed in claim 1.

**General Description of the Invention**

A pressure-actuatable switching device for sensing a compressive force acting thereon comprises a first sheet element and a second sheet element, each one of the first and second sheet elements having a side facing towards the other sheet element and a side facing away from the other sheet element, a pressure sensitive polymer layer arranged between the first and second sheet elements and an evaluation circuit. The pressure sensitive polymer layer is electrically insulating when subjected to pressure not exceeding a certain pressure threshold and electrically conducting when subjected to pressure exceeding the pressure threshold. The evaluation circuit is electrically connected to the pressure sensitive polymer layer in such a way that it can evaluate whether the pressure sensitive polymer layer is electrically insulating or electrically conductive. According to an important aspect of the invention, the first sheet element comprises, on the side facing towards the second sheet element, at least one projection, such that a compressing force acting on the pressure-actuatable switching device is transmitted to the pressure sensitive polymer layer at least preponderantly through the at least one projection. Depending on the exact configuration of the device, the compressing force may be transmitted to the pressure sensitive polymer layer only through the at least one projection.

The evaluation circuit may comprise, for instance, an ohmmeter, a voltage source and a current meter, a current source and a voltmeter, a microprocessor, and/or any other electrical component enabling it to evaluate whether the pressure sensitive polymer is conductive or insulating.

Those skilled will appreciate that the surface of the at least one projection that faces the pressure sensitive polymer layer determines, at least partially, the amount of pressure acting locally on the pressure sensitive polymer layer, for a given compressive force applied to the device. Consider the following example. Be A the surface of the pressure-actuatable switching device, $F_s$ the compressing force at which a switching action shall occur and $P_c$ the pressure threshold at which the pressure sensitive polymer layer becomes conductive. The applied pressure $P_s$ at which the switching shall occur thus yields as $P_s=F_s/A$. (The externally applied pressure at which switching shall occur is also referred to as "turn-on pressure".) The ratio $P_c/P_s$ of the pressure threshold of the pressure sensitive polymer layer to the pressure at which the switching action is desired corresponds to the factor by which the externally applied pressure (compressing force divided by area A) has to be multiplied. Through the provision of the at least one projection on the first sheet element, one determines the amount of pressure locally transmitted to the pressure sensitive polymer layer. For instance, if the pressure is transmitted only through the at least one projection, which is assumed to have a surface $A_P$, the pressure to which the pressure sensitive polymer layer is subjected for the specified compressing force amounts to $F_s/A_P$. Under the same assumptions, the at least one projection thus has to be arranged such that $A/A_P=P_c/P_s$ in order to achieve the switching action at the specified compressing force.

Indeed, the second sheet element may comprise, on the side facing towards the first sheet element, at least one projection.

Those skilled will note that the at least one projection may have any suitable shapes. It may for instance be provided in form of a grid, meandrous shapes, etc. According to a preferred embodiment of the invention, however, the first sheet element comprises a plurality of projections. The interstices between the projections are preferably at least partially filled with a filler material. Those skilled will appreciate that a part of the compressing force might in this case be transmitted to the pressure sensitive polymer layer through the filler material. The filler material therefore advantageously has a substantially lower Young's modulus than the projections. More preferably, the Young's modulus of the filler material amounts to less than 50 % of the Young's modulus of the projection. Even more preferably, the Young's modulus of the filler material amounts to less than 10% of the Young's modulus of the projection. The plurality of projections may comprise wall-shaped projections, i.e. projections exhibiting, in a plane parallel to the pressure sensitive polymer layer, little width in proportion to a length extension. The length extension may be straight, curvilinear, arc-shaped, etc. Preferably, the wall-shaped projections are substantially straight and arranged parallel to each other.

Alternatively, the wall-shaped projections may also be arranged substantially concentrically. The plurality of projections may also comprise column-shaped projections, i.e. projection exhibiting, in a plane parallel to the pressure sensitive polymer layer, approximately equal diameters in different directions. The first sheet element advantageously comprises at least one strengthening rib extending between said projections, substantially parallel to the pressure sensitive polymer layer, for enhancing rigidity of said first sheet element.

According to a preferred embodiment of the invention, the at least one projection tapers in direction to the pressure sensitive polymer layer.

Optionally, the pressure-actuatable switching device comprises at least one ventilation channel providing fluid connection of the interstices with surroundings of the pressure-actuatable switching device, so as to compensate for changes in atmospheric pressure. This feature is useful in applications of the device, in which one wishes to reduce as much as possible the influence atmospheric pressure variations, e.g. if the pressure-actuatable switching device is to be used as a button actuatable by a finger.

There are a number of possibilities for connecting the pressure sensitive polymer layer to the evaluation circuit. Preferably, the pressure-actuatable switching device comprises a first electrode and a second electrode, that are both arranged in electrical contact with the pressure sensitive polymer layer in such a way that they are conductively connected through the pressure sensitive polymer layer if the latter is subjected to pressure exceeding the pressure threshold. Depending on the application of the pressure-actuatable switching device, the first and second electrodes may be resistive or conductive.

Preferably, the first electrode is provided by the first sheet element including an electrically conductive region, e.g. the projections or at least a portion of the projections, on the side facing the second sheet element. That side is in this case also in contact with the pressure sensitive polymer layer. Alternatively, the first electrode is a flexible electrode sandwiched between the at least one projection of the first sheet element and the pressure sensitive polymer layer, the first flexible electrode being in electrical contact with the pressure sensitive polymer layer. In both alternatives, the second electrode may be provided by the second sheet element including an electrically conductive region on the side facing the first sheet element or as a separate electrode sandwiched between the second sheet element and the pressure sensitive polymer layer. Pressure-actuatable switching devices having their first electrode on the first side of the pressure sensitive polymer layer and their second electrode on the second side thereof may be referred to as "through-mode" pressure-actuatable switching devices.

In contrast to the through-mode devices stand the pressure-actuatable switching devices having both their first and their second electrode on one side of the pressure sensitive polymer layer and a shunt electrode separate from the first and second electrodes on the other side, the shunt electrode being arranged in electrical contact with the pressure sensitive polymer layer in such a way that the first and second electrodes are conductively connected through the shunt electrode and the pressure sensitive polymer layer if the latter is subjected to pressure exceeding the pressure threshold. Pressure-actuatable switching devices of this kind may be referred to as "shunt-mode" pressure-actuatable switching devices.

In shunt-mode devices, the first and second electrodes may be provided by the first sheet element comprising a first electrically conductive region and a second electrically conductive region on the side facing the second sheet element or as separate first and second flexible electrodes, in electrical contact with the pressure sensitive polymer layer, sandwiched between the first sheet element and the pressure sensitive polymer layer. The shunt electrode may in these cases be provided by the second sheet element including an electrically conductive region on the side facing the first sheet element or, alternatively, as a separate electrode, in electrical contact with the pressure sensitive polymer layer, sandwiched between the second sheet element and the pressure sensitive polymer layer.

In other shunt-mode devices, the first and second electrodes may be provided by the second sheet element comprising a first and a second electrically conductive regions on the side facing the second sheet element or as separate first and second electrodes, in electrical contact with the pressure sensitive polymer layer, sandwiched between the second sheet element and the pressure sensitive polymer layer. In these cases, the shunt electrode may be provided by the first sheet element including an electrically conductive region on the side facing the first sheet element, or alternatively, as a separate shunt electrode, in contact with the pressure sensitive polymer layer, sandwiched between the first sheet element and the pressure sensitive polymer layer.

Regarding manufacturing of the discussed embodiments of pressure-actuatable switching devices, it should be noted that any suitable methods can be used. Preferably, however, the pressure sensor is produced by using printing techniques. The pressure sensitive polymer layer may, for instance, be produced using a spin-coating method, a printing method, such as e.g. screen-printing, off-set printing, gravure printing, flexography printing and/or inkjet printing, or any other deposition method. Though any suitable method may be used, inkjet printing is preferred, since it allows forming layers with a well-defined thickness between about 50 nm and 5 to 10 micrometers in a single print. Higher thickness may be achieved by multiple prints. The achievable lateral resolution lies in the range of tens of micrometers, e.g. 1 pixel typically corresponds to 75 $\mu$m. If the pressure sensitive polymer disclosed in the patent WO 2005/076289 A1 is used, the thickness of the pressure sensitive polymer layer is preferentially comprised in the range between 1 and 30 $\mu$m. For

any of the printing methods, any suitable ink based on the pressure sensitive polymer may be used. Such an ink would preferably comprise 0.5 to 5 wt.% of the pressure sensitive polymer, such as e.g. poly(diphenylenephthalide), poly (terphenylenephthalide), polyfluoronylenephthalide, polyarylenesulforphthalide, or any other suitable pressure-sensitive polymer, 95-99 wt.% of a solvent, such as e.g. cyclohexanone, nitrobenzene, chloroform or any other suitable solvent, and 0.001-0.1 wt.% of additives. Blends of pressure sensitive polymers as well as blends of one or more pressure sensitive polymers and other polymers can be used in the ink.

As concerns the first, the second and the shunt electrodes, or any conductive structures such as layers or patches that might be included in the pressure-actuatable switching device, they can be made of bulk material, e.g. bulk metal, but preferably they are also formed using methods such as e.g. metal evaporation or chemical precipitation or a printing process, such as e.g. screen-printing, off-set printing, gravure printing, flexography printing and/or inkjet printing. The conductive structures may be e.g. be formed by screen printing using conductive inks, such as e.g. Acheson Electrodag PF-007, Acheson Electrodag PF-046 or DowCorning PI-2000, or by inkjet printing using silver inkjet inks, e.g. Cabot AG-IJ-150-FX, Cima Nanotech IJ 242/21, Tetenal Silver Fluid UV, Harima Chem. NanoPaste or any other suitable inks.

As concerns any resistive structures (e.g. resistive electrodes or films) that might be included in the pressure-actuatable switching device, they may be formed of any suitable resistive bulk material (e.g. carbon black) or by using any suitable application process, e.g. screen-printing, off-set printing, gravure printing, flexography printing and/or inkjet printing. Preferred resistive inks include, for instance, the Acheson Electrodag PM-007, Nicomatic LtD C-100 or Nicomatic LtD C-200 inks for screen printing as well as, for instance, Tetenal UV Resistor LR, Tetenal UV Resistor MR, Tetenal UV Resistor HR carbon inks for inkjet printing.

According to a highly preferred embodiment of the invention, the at least one projection, and possibly the at least one strengthening rib, has been formed in a 3D inkjet printing technique. Those skilled will appreciate that also the filler material may be formed in 3D inkjet printing technique. In 3D inkjet printing technique the structure to be formed is printed layer by layer. After printing of a layer, it is subjected to pre-curing, i.e. a partial curing. During pre-curing, the freshly printed layer is subjected to a dose of infrared or ultraviolet light (depending on the ink used for the printing) that is smaller that the dose used for complete curing. If the pressure-actuatable switching device comprises a filler material between the projections, the filler material structures are preferably raised in parallel to the projections. For printing the projections, any suitable inks may be used, for instance, Tetenal Silver Fluid UV silver inks. In this case, e.g. polyethylene could be used as soft filler material because it complies with the requirement on Young's modulus mentioned above.

**Brief Description of the Drawings**

Preferred embodiments of the invention will now be described, by way of example, with reference to the accompanying drawings in which:

Fig. 1 is a schematic perspective view of a through-mode pressure-actuatable switching device;

Fig. 2 is an elevation cross-sectional view of the device of Fig. 1 under the action of external pressure;

Fig. 3 is a detail of Fig. 2;

Fig. 4 shows the dependence of the amplification factor upon the number of individual print layers forming the horizontal plate of the device of Figs. 1-3 for three distinct inter-wall distances;

Fig. 5 is an elevation cross-sectional view of a variant of the device of Fig. 1;

Fig. 6 is an elevation cross-sectional view of a variant of the device of Fig. 5;

Fig. 7 is a schematic perspective view of a pressure-actuatable switching device with tapering column-shaped projections;

Fig. 8 is an elevation cross-sectional view of a pressure-actuatable switching device of inverted geometry;

Fig. 9 is an elevation cross-sectional view of a pressure-actuatable switching device with an additional flexible electrode;

Fig. 10 is a partially exploded perspective view of a shunt-mode pressure-actuatable switching device;

Fig.11 is a partially exploded perspective view of another shunt-mode pressure-actuatable switching device;

Fig. 12 is a schematic perspective view of a through-mode pressure-actuatable switching device of cylindrical geometry;

Fig. 13 is an elevation cross-sectional view of the device of Fig. 12;

Fig. 14 is a view of the plane XIV-XIV of Fig. 13;

Fig. 15 is schematic perspective view of a pressure sensor;

Fig. 16 a cross-sectional view of another pressure sensor.

**Description of Preferred Embodiments**

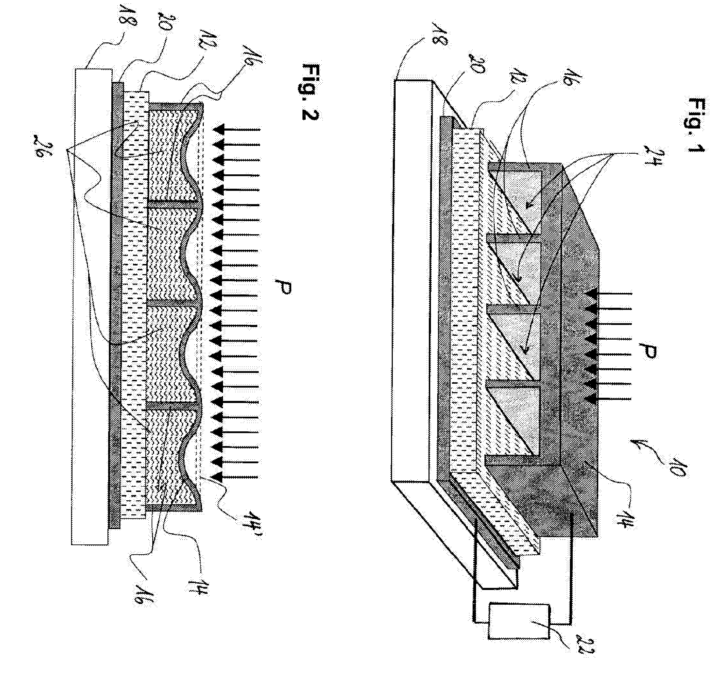

Figs. 1 to 3 show a through-mode pressure-actuatable switching device 10, comprising a pressure sensitive polymer layer 12 sandwiched between a first sheet element and a second sheet element. The first sheet element comprises a first conductive electrode 14 that includes a plurality of wall-shaped projections 16 on the side facing the second sheet element and the pressure sensitive polymer layer 12. The second sheet element comprises a substrate 18 and a second conductive electrode 20 arranged thereon. An evaluation circuit 22 is connected between the first and second electrodes for measuring the electrical resistance of the pressure sensitive polymer layer. The interstices 24 between the different projections are filled with a soft filler material 26 (not shown in Fig. 1 for clarity of the drawing). As long as no or only little pressure is applied on the device 10, the top portion (hereinafter referred to as "cover plate") of the electrode 14 remains substantially even (as illustrated in Fig. 1), but with increasing pressure, the first electrode leaves its neutral position 14' and bends as exaggeratedly shown in Fig. 2.

The projections 16 have the form of straight walls with thickness b separated by the distance L. The thickness of the cover plate is d. The area of the pressure-actuatable switching device 10 is A. Be F the compressing force applied to the device 10. The externally applied pressure thus amounts to P=F/A. In the absence of a filler material 26 in the interstices 24, the compressing force is transmitted to the pressure sensitive polymer layer only by the projections. In this case, the pressure P' transmitted by the projections 16 to the pressure sensitive polymer layer yields as P'=F/$A_P$, where $A_P$ is the area of the projections 16 in contact with the pressure sensitive polymer layer 12. The dimensionless factor

$$=A/A_P$$

(hereinafter called geometrical factor) corresponds in this case (no filler material) to the ratio

$$K=P'/P,$$

i.e. to the amplification of the pressure P' locally transmitted to the pressure sensitive polymer layer with respect to the externally applied pressure P. K is referred to as the amplification factor.

For the more general case that there is a filler material 26 in the interstices 24, the amplification factor K depends on the dimensionless parameters and defined as:

$$\alpha = \frac{A}{A_P} \stackrel{here}{=} \frac{L+b}{b}; \quad \beta = \left\{ \frac{3E_f(1-\nu_e^2)}{E_e} \times \frac{L^4}{d^3 h} \right\}^{1/4},$$

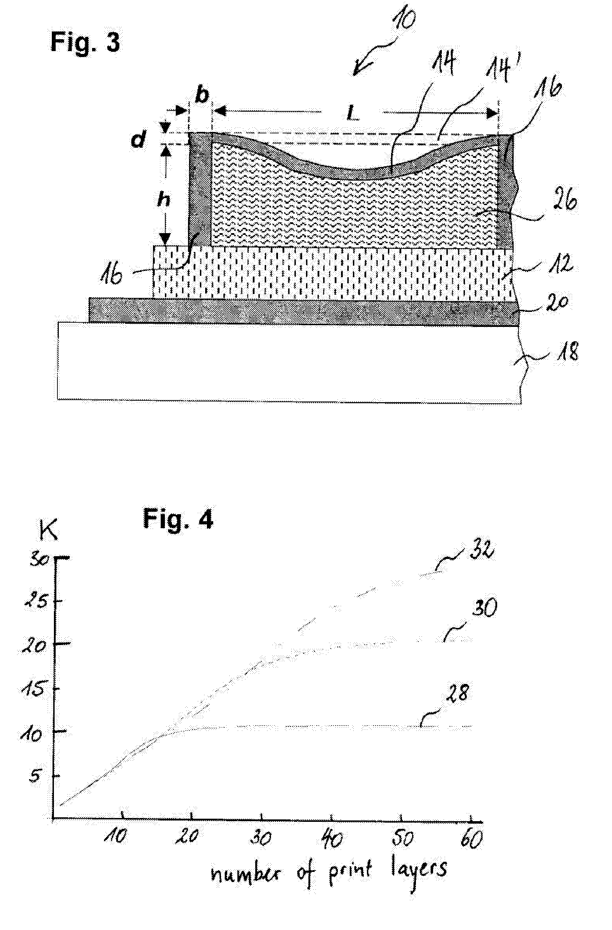

where $E_f$ is the Young's modulus of the filler material, $E_e$ and $\nu_e$ are, respectively, the Young's modulus and Poisson's ratio of the electrode material, d is the thickness of the electrode plate and h is the height of the walls (see Fig. 3) The amplification factor K can be calculated according to the expression:

$$K = \frac{2(\alpha - 1)}{\beta} \times \frac{\cosh \beta - \cos \beta}{\sinh \beta + \sin \beta}.$$

Making use of the pressure-amplifying structure defined by the cover plate, the projections and the filler material allows one to adapt pressure-actuatable switching devices with a given pressure sensitive polymer layer in such a way that a pressure, lying in the range of values required by the application (e.g. in the range of pressures typically applied by a human finger), applied to the device results in a switching action of the device.

Let us assume, for instance, that the pressure-amplifying structure has been printed by 3D inkjet printing technique using a Tetenal Silver Fluid UV silver ink for the first electrode ($E_e$=83 GPa, $_e$=0.37), polyethylene for the soft filler material ($E_f$=0.15 GPa) and poly(diphenylenphthalide) for the pressure sensitive polymer layer. Let us further assume that d=h. Fig. 4 shows the achieved amplification factor K as a function of the number of individual print layers of the cover plate and for different geometries. The solid line 28 corresponds to the case of an inter-wall distance L of 10 pixels (=750 $\mu$m), the dashed line 30 corresponds to the case L=20 pixels (=1500 $\mu$m) and the dashed-dotted line 32 to the case L=30 pixels (=2250 $\mu$m).

For the case that L=51 pixels (3825 $\mu$m) and the cover plate having a thickness of 30 print layers (corresponding to d=150 $\mu$m) one finds $K$≈17. Since the critical pressure for poly(diphenylenphthalide) is $P_c$ ≈ 4 atm (see Lachinov, A. N. "Polymer films as a material for sensors", Sensors and Actuators A39, 1-6, 1993), one finds that the pressure-actuatable switching device of this configuration switches at an applied external pressure of P ≈ 0.24 atm. A similar device built with the same materials, but with an inter-wall distance L of 43 pixels and a cover plate thickness of 50 layers yields an amplification factor of 31. The latter device then switches at an applied pressure P ≈ 0.13 atm.

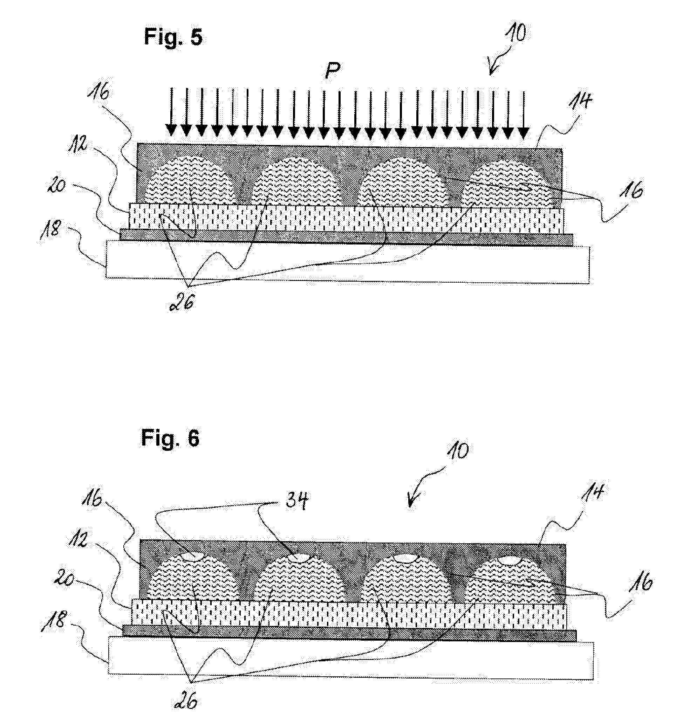

Fig. 5 represents a variant of the pressure-actuatable switching device of Fig. 1. The sole difference resides in the amplification structure, i.e. the first electrode 14 and the filler material 26. The projections 16 are wall-shaped and taper in direction towards the pressure sensitive polymer layer 12 so as to provide a better deviation of the compressing force from above the zones above the interstices filled with the filler material to the projections and enhanced rigidity of the first electrode 14 with respect to the device shown in Fig. 1. As a consequence, the amplification of the transmitted pressure is more efficient than in the device of Fig. 1. Indeed, in the present embodiment, the amplification factor K is closer to the geometric parameter $\alpha$.

In Fig. 6, the amplification structure is provided with ventilation channels 34, which connect the interstices fluidly with the surroundings of the pressure-actuatable switching device 10. The ventilation channels 34 reduce the influence of variations of atmospheric pressure on the response of the device. The ventilation channels may communicate with the atmosphere through special openings either in the first electrode or on side surfaces of the device. To avoid as much as possible any decrease of the rigidity of the first electrode (and thus any loss in the amplification factor), the ventilation channels are preferably made as small as possible. If the first electrode and the filler material are formed using 3D inkjet printing, the smallest printable feature corresponds to 1 pixel (75 $\mu$m) which determines in this case the minimal width of the ventilation channels.

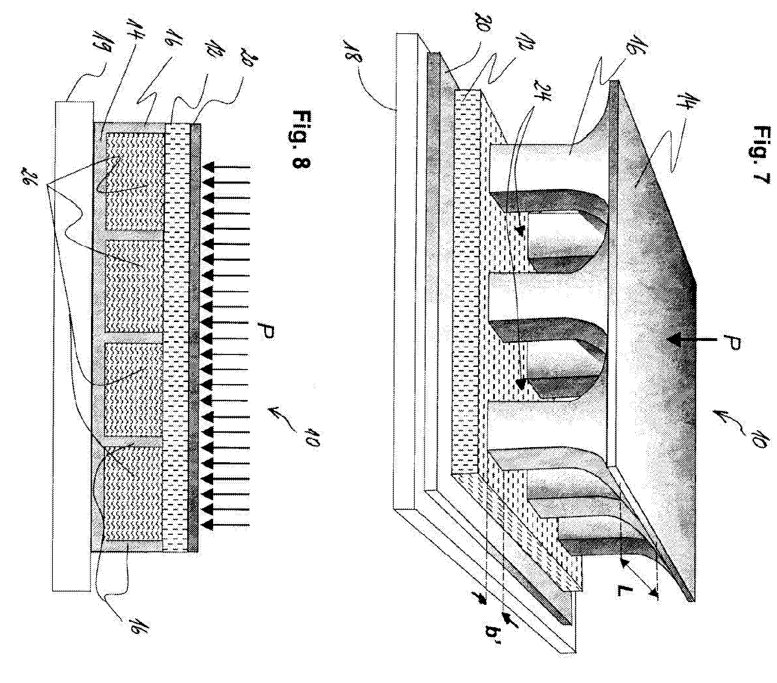

Fig. 7 shows a pressure-actuatable switching device, in which the projections 16 of the first sheet element are provided as columns of quadratic cross-section tapering towards the pressure sensitive polymer layer 12. The interstices 24 between the column-shaped projections 16 may be filled with the soft filler material (not shown). The projections are arranged in a quadratic pattern with L' being the distance between the centres of two nearest columns. The geometric factor can in this case be expressed as =$(1+L'/b')^2$, where b' is the side length of the projections at the pressure sensitive polymer layer. In a device of a few millimetres side length having columns as projections the amplification factor K can easily amount to 100.

Fig. 8 shows a through-mode pressure-actuatable switching device of inverted geometry. The device comprises a first sheet element, including a substrate 19 and the first electrode 14. The first electrode is arranged on the side of the substrate 19 that faces the second sheet element, which is in this case provided as the second electrode 20. The first and second electrodes 14, 20 sandwich a pressure sensitive polymer layer 12. The first electrode comprises projections 16, protruding from the substantially flat portion of the first electrode that is arranged on the substrate 19. The interstices between the projections 16 are filled with the soft filler material. The principle of operation of the device of Fig. 8 is substantially the same as of the previously described devices.

The inverted configuration has the advantage that the "cover plate", i.e. the flat part of the first electrode 14, is supported by the substrate 19. This increases the rigidity of the first electrode, even if it is thin. In this configuration, however, the second electrode 20 and the pressure sensitive polymer layer 12 rest on the projections 16 and the filler material. The rigidity of these components thus has to be chosen such that under the specified compressing forces, they do not tear. To increase the mechanical stability, the thicknesses of the second electrode 20 and the pressure sensitive polymer layer 12 can be increased or reinforcement elements, such as a reinforcement grid or reinforcement beams can be used. Those skilled will be aware that with increasing rigidity of the second electrode 20 and the pressure sensitive polymer layer 12 increases the amplification factor K of the device. It will also be appreciated that in case the first electrode is mechanically reinforced by some reinforcement member (in this case the substrate 19), the projections may be chosen to have simple elevation cross-section (as opposed to tapering cross-sections). Compared with the case of tapering projections, this decreases production time and cost.

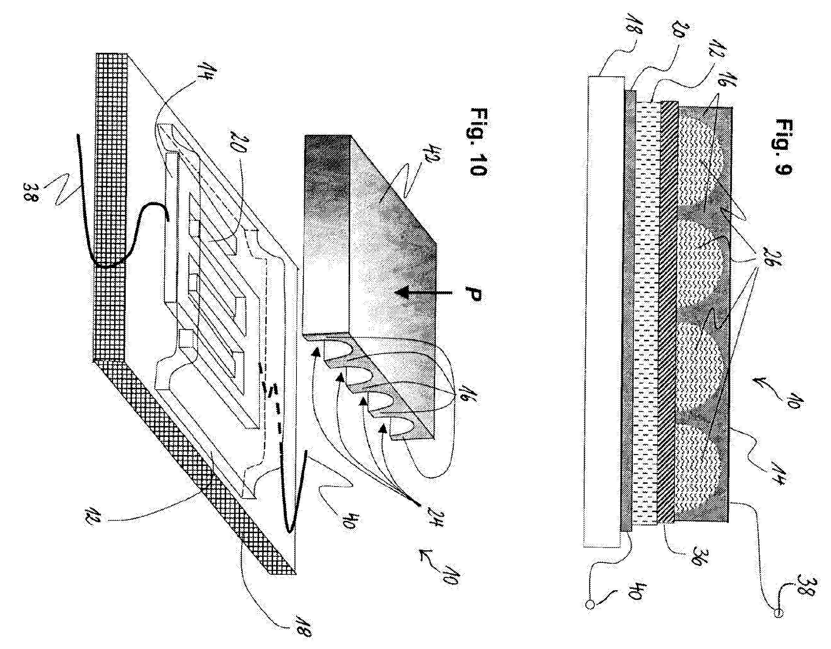

Fig. 9 shows yet another pressure-actuatable switching device 10. The device represented comprises a pressure sensitive polymer layer 12 sandwiched between a first sheet element and a second sheet element. The first sheet element comprises the first conductive electrode 14 that includes a plurality of tapering projections 16 on the side facing the second sheet element and the pressure sensitive polymer layer 12. Filler material 26 fills the interstices between the different projections. The second sheet element comprises a substrate 18 and a second conductive electrode 20 arranged thereon. The projections 16 of the first electrode 14 are not in direct contact with the pressure sensitive polymer layer 12 as a flexible resistive film 36 is sandwiched between the amplification structure (here the first electrode 14 with the projections 16 and the filler material 26) and the pressure sensitive polymer layer 12. The shown device is connectable to an evaluation circuit by terminals 38, 40 conductively connected to the first and second electrodes 14, 20, respectively.

A problem that may occur in manufacturing pressure-actuatable switching devices based upon pressure sensitive polymers is the formation of small through-holes in the pressure sensitive polymer layers. Such through-holes may thus cause the electrode structures on both sides of the pressure sensitive polymer layer to be in contact well below the pressure threshold specified for the particular polymer. In some cases, this may lead to short circuits. The provision of a resistive layer arranged on at least one side of the pressure sensitive polymer layer drastically reduces the risk of a short circuit through the pressure sensitive polymer layer. The flexible resistive film 36 of the present embodiment prevents that the first and second electrodes come into direct contact in case of a through-hole in the pressure sensitive polymer layer. Those skilled will appreciate that the same benefit may also be obtained by providing the first electrode 14 and/or the second electrode 20 as resistive electrodes.

Let us assume that a through-hole occurred during the production of the pressure sensitive polymer layer. Even in the absence of pressure high enough to render the pressure sensitive polymer conductive, the first and second electrodes may be electrically connected through the resistive film 36. This connection, however, exists only in those regions of the resistive film situated directly at the through hole. A typical diameter of a through-hole would be in the order of 1 $\mu$m. A typical value of the resistivity of a carbon ink is approximately 100 Ohm cm a typical thickness the resistive film is approximately 10 $\mu$m. Under these assumptions, one finds that the resistance between the first and second electrodes, in presence of a through-hole and without the pressure sensitive polymer layer being conductive, of ~1 MOhm. In contrast, as soon as sufficient pressure is applied to the device, all the zones of the pressure sensitive polymer layer compressed by the projections become conductive, which yields a much lower resistance between the first and second electrodes. For example, for the device shown in Fig. 7 and for b'= 75 $\mu$m (1 pixel) the resistance may drop to estimated 100 Ohm per column, if the pressure sensitive polymer layer is conductive. For this reason, formation of few through-holes during the production does not necessarily render the device unusable.

Fig. 10 shows a shunt-mode pressure-actuatable switching device 10. The device comprises a first electrode 14 and a second electrode 20 arranged so as to interdigitate one with the other without being in direct electrical contact on a substrate 18. A pressure sensitive polymer layer 12 is arranged on top of and in electrical contact with the first and second electrodes 14, 20. A shunt electrode 42 is arranged on top of and in electrical contact with the pressure sensitive polymer layer 12. The shunt electrode comprises projections 16 tapering in direction of the pressure sensitive polymer layer 12. Interstices 24 may be filled with the soft filler material (not shown in Fig. 10 for sake of clarity). The first and second electrodes are connectable to an evaluation circuit at terminals 38 and 40.

The device of Fig. 10 operates as follows. When a compressing force is exerted on the device 10, pressure is transmitted locally to the pressure sensitive polymer layer through the projections 16 of the shunt electrode. If the pressure sensitive polymer layer 12 subjected to sufficient pressure in certain zones, it becomes conductive in thickness direction in these zones and allows an electrical current to flow from the first electrode 14 to the shunt electrode 42 and from the shunt electrode 42 to the second electrode 20. The resistance between the first and second electrodes 14, 20 thus decreases in consequence. As concerns the particular design of the device of Fig. 10, those skilled will appreciate that the substantially straight projections 16 of the shunt electrode 42 run substantially non-collinear to the teeth (or the fingers) of the first and second electrodes 14, 20. Preferably, the straight projections and the teeth of the first and second electrodes are oriented at right angle.

With respect to the problem of through-hole formation in the pressure sensitive polymer layer during production of the device, it is worthwhile noting that shunt-mode devices are intrinsically more robust against malfunctioning caused by through-holes. The explanation of this is that in order to establish a short-circuit between the first and the second electrodes, at least two through-holes have to exist. Moreover, at least one of these though-holes has to extend between the first and the shunt electrodes and at least one has to extend between the second and the shunt electrodes. The probability for such a situation to occur is significantly reduced with respect to the probability of formation of at east one through-hole.

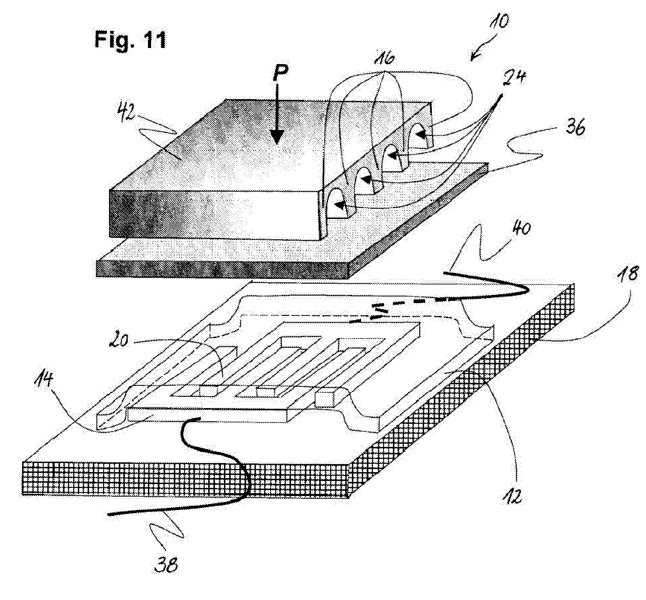

Fig. 11 shows substantially the same pressure-actuatable switching device as Fig. 10 with the difference that the shunt electrode 42 is not in direct electrical contact with the pressure sensitive polymer layer 12. Indeed, a flexible resistive film 36 is sandwiched between the pressure sensitive polymer layer and the shunt electrode in order to further reduce the probability of a failure of the device due to a through-hole in the pressure sensitive polymer layer.

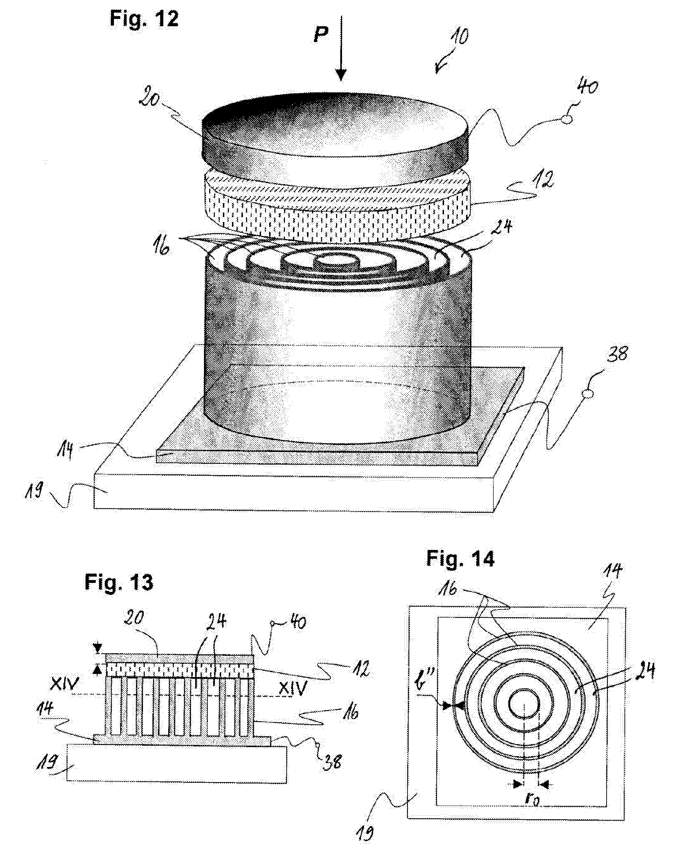

Figs. 12 to 14 show a pressure-actuatable switching device 10 of cylindrical configuration. The device comprises a first sheet element, including a substrate 19 and the first electrode 14. The first electrode is arranged on the side of the substrate 19 that faces the second sheet element, which is in this case provided as the second electrode 20. The first and second electrodes 14, 20 sandwich a pressure sensitive polymer layer 12. The first electrode comprises projections 16, protruding from the substantially flat portion of the first electrode that is arranged on the substrate 19. The interstices 24 between the projections 16 may be filled with soft filler material. The device is connectable to an evaluation circuit at terminals 38, 40. The principle of operation of the device of Figs. 12-14 is the same as that of the device of Fig. 8.

The projections 16 have the form of concentric ring walls of wall thickness b" small compared to the wall radii. The radius $r_i$ of the i-th projection (counted from the innermost to the outermost projection) is given by the relation

$$r_i = i \times r_0,$$

where i is the number of the projection and $r_0$ the radius of the innermost projection. The geometric factor can be calculated as follows. Pressure that is applied to the ring of area $A_i = 2\pi i (r_0)^2$ with inner radius $r_0(i-0.5)$ and outer radius $r_0(i+0.5)$ is transmitted via the projection number i, which has cross-section area $a_i = 2\pi i r_0 b"$. The geometric factor for the wall number i is thus expressed as $= r_0/b"$ independently of the wall number. The amplification factor can be approximated as $K$ $r_0/b"$, if the filler material in the interstices is sufficiently flexible.

Those skilled will appreciate that a resistive film may additionally be provided between the pressure sensitive polymer layer and one of the first and second electrodes to reduce the risk of short-circuits due to through holes in the pressure sensitive polymer layer. To further increase robustness of the device against short-circuits, the device of Figs. 12 to 14 could be modified to operate in shunt mode. In this case, one could replace in the device of Figs. 12 to 14 the second electrode 20 by two interdigitating electrodes, while the pressure-amplifying structure would play the role of the shunt electrode.

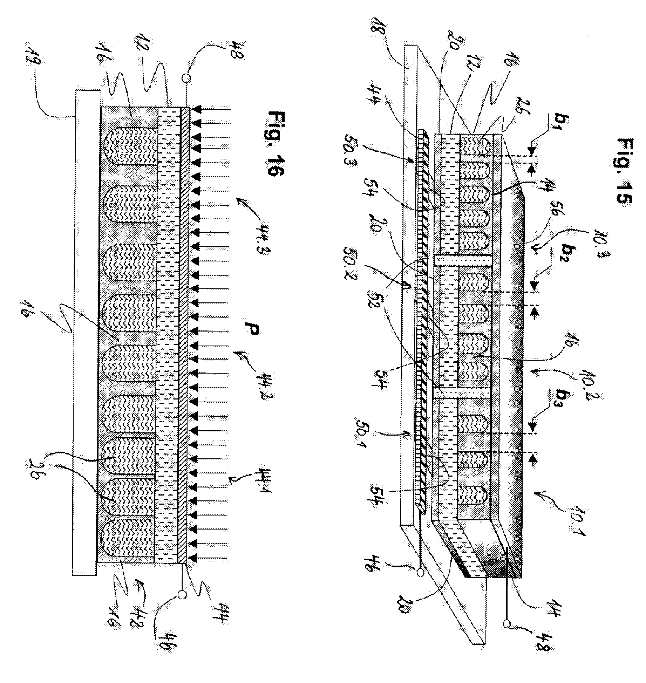

Fig. 15 shows a pressure sensor based upon three pressure-actuatable switching devices 10.1, 10.2, 10.3 switching at different values of the applied pressure. The pressure sensor comprises a substrate 18 on which is arranged an elongated resistive electrode 44 as well as three conductive second electrodes 20. One end of the resistive electrode 44 is connected to a first terminal 46 of the pressure sensor. The second electrodes 20 of the pressure-actuatable switching devices 10.1, 10.2, 10.3 are connected at different connection locations 50.1, 50.2, 50.3 to the resistive electrode 44 via conductive lines 54.

The pressure-actuatable switching devices 10.1, 10.2, 10.3 have each a first conductive electrode 14. The first conductive electrodes 14 are interconnected with one another and connected to the terminal 48 of the pressure sensor by means of a conductive cover layer 56. In each pressure-actuatable switching device, the first electrode 14 and the second electrode 20 sandwich a pressure sensitive polymer layer 12. Each first electrode 14 comprises a plurality of projections 16 protruding towards the pressure sensitive polymer layer 12. The interstices between the projections are filled with a soft filler material 26.

The pressure sensitive polymer layers 12 are made of the same material, but the pressure amplifying structures (i.e. the respective first electrode 14 with the projections 16 and the filler material 26) have different amplification factors K for the different pressure-actuatable switching devices 10.1, 10.2, 10.3. As a result, the turn-on pressures of the different pressure-actuatable switching devices 10.1, 10.2, 10.3, i.e. those values of the applied external pressure P at which the switching occurs, are different. The pressure-actuatable switching devices 10.1, 10.2, 10.3 are separated from each other by means of a soft spacer barrier 52, so that mechanical deformations occurring in one of the pressure-actuatable switching devices 10.1, 10.2, 10.3 have negligible dependence on the mechanical deformations in the neighbouring pressure-actuatable switching device.

The pressure-actuatable switching devices 10.1, 10.2, 10.3 have different values of the geometric factors . This is illustrated in that the projections 16 have different widths $b_1$, $b_2$ and $b_3$. The pressure-actuatable switching devices 10.1, 10.2, 10.3 are connected to the connection locations 50.1, 50.2, 50.3 on the resistive electrode 44 in such a way that their geometric factors go increasing with the distance of the connection location 50.1, 50.2, 50.3 to the terminal 46. Since for a given choice of materials (which is the same for the shown pressure-actuatable switching devices 10.1, 10.2, 10.3) the amplification factor K is proportional to the geometric factor , the amplification factors of the pressure-actuatable switching devices 10.1, 10.2, 10.3 are also arranged in increasing order.

The turn-on pressures of the different pressure-actuatable switching devices can be expressed as $P_i = P_c/K_i$, where $P_i$ is the turn-on pressure of the i-th pressure-actuatable switching device, $K_i$ the amplification factor of the i-th pressure-actuatable switching device and $P_c$ the pressure threshold of the pressure sensitive polymer layers. As long as the applied external pressure does not exceed $P_1$, none of the switching elements is in the substantially conductive state. If it lies within the range from $P_1$ to $P_2$, an electrical current may flow through the pressure-actuatable switching device 10.1 on the left in Fig. 15. The resistance that can be measured between the terminals 46 and 48 thus amounts to the effective resistance of the portion of the resistive electrode 44 between the first connection location 50.1 and terminal 46. If the external applied pressure exceeds the second pressure threshold $P_2$, the resistance that can be measured between the terminals 46, 48 is reduced to the resistance of the portion of the resistive electrode 44 between the second connection location 50.2 and terminal 46.

The pressure sensor of Fig. 15 thus provides a mapping of the external applied pressure on the resistance that can be measured between the terminals 46, 48.

Fig. 16 shows a pressure sensor of alternative construction. The illustrated sensor comprises a sandwich structure of an elongated conductive shunt electrode 42 arranged on a substrate 19, a pressure sensitive polymer layer 12 and an elongated resistive electrode 44. The shunt electrode 42 comprises a plurality of projections 16. When an external pressure P acts on the pressure sensor as indicated by the arrows in Fig. 16, the resistive electrode 44 and the pressure sensitive polymer layer 12 are pressed onto the projections 16 of the shunt electrode 42.

As can be seen in Fig. 16, the widths of the projections 16 vary along the longitudinal direction of the resistive electrode 44. Consequently, different geometrical factors and thus different amplification factors K are associated to different portions 44.1, 44.2, 44.3 of the resistive electrode 44. In Fig. 16, the geometrical factor increases from left to right. As the choice of materials is the same over the entire pressure sensor, the amplification factors also increase from left to right. The pressure threshold $P_c$ of the pressure sensitive polymer layer 12 does not vary significantly over the area of the pressure sensor. As a consequence, each resistive portion 44.1, 44.2, 44.3 is shunted by the shunt electrode at different values of the applied pressure.

When no external pressure is applied to the pressure sensor, the resistance between the terminals 46, 48 is that of the entire resistive electrode 44. The pressure P is assumed to be applied homogeneously to the whole area of the pressure sensor. As soon as the applied external pressure P exceeds the first turn-on pressure $P_1 = P_c/K_1$ of the first portion 44.1 (where $K_1$ is the amplification factor of that portion), the first resistive portion 44.1 is shunted through the pressure sensitive polymer layer 12 and the corresponding portion of the shunt electrode 42. Increasing the applied external pressure P above the turn-on pressures $P_2$ and $P_3$ (of the second and third resistive portions 44.2 and 44.3) results in shunting of the resistive portions 44.2, 44.3, which translates by a stepwise decrease of the resistance measured between the terminals 46, 48. As a result, the applied external pressure P is mapped on the resistance of the pressure sensor.

Those skilled will readily note that the devices of Figs. 15 and 16 are not limited to a specific number of zones with different amplification factors. In general, the higher the number of zones switching at different values of the applied pressure, the better the mapping of pressure to resistance can be achieved.

**Claims**

1.   A pressure-actuatable switching device for sensing a compressive force acting thereon, comprising
    a first sheet element and a second sheet element, each one of said first and second sheet elements comprising a side facing towards the other sheet element and a side facing away from the other sheet element;
    a pressure sensitive polymer layer arranged between the first and second sheet elements, said pressure sensitive polymer layer being electrically insulating when subjected to pressure not exceeding a certain pressure threshold and electrically conducting when subjected to pressure exceeding said pressure threshold;
    an evaluation circuit electrically connected to said pressure sensitive polymer layer for evaluating whether said pressure sensitive polymer layer is electrically insulating or electrically conductive;
    **characterized in that** said first sheet element comprises, on the side facing towards said second sheet element, at least one projection, such that the compressing force acting on said pressure-actuatable switching device is transmitted to said pressure sensitive polymer layer at least preponderantly through said at least one projection.

2.   A pressure-actuatable switching device according to claim 1, wherein said second sheet element comprises, on the side facing towards said first sheet element, at least one projection.

3.   A pressure-actuatable switching device according to claim 1 or 2, wherein said first sheet element comprises a plurality of projections.

4.   A pressure-actuatable switching device according to claim 3, comprising interstices between said projections, said interstices being least partially filled with a filler material.

5. A pressure-actuatable switching device according to claim 4, wherein said filler material has a substantially lower Young's modulus than said projections.

6. A pressure-actuatable switching device according to any one of claims 3 to 5, wherein said projections comprise wall-shaped projections.

7. A pressure-actuatable switching device according to claim 6, wherein said wall-shaped projections are substantially straight and arranged parallel to each other.

8. A pressure-actuatable switching device according to claim 6, wherein said wall-shaped projections are arranged substantially concentrically.

9. A pressure-actuatable switching device according to any one of claims 3 to 8 wherein said projections comprise column-shaped projections.

10. A pressure-actuatable switching device according to any one of claims 1 to 9 wherein said at least one projection tapers in direction to said pressure sensitive polymer layer.

11. A pressure-actuatable switching device according to any one of claims 3 to 10, wherein said first sheet element comprises at least one strengthening rib extending between said projections for enhancing rigidity of said first sheet element.

12. A pressure-actuatable switching device according to any one of claims 1 to 11, wherein said at least one projection has been formed in a 3D inkjet printing technique.

13. A pressure-actuatable switching device according to any one of claims 1 to 12, comprising a first electrode and a second electrode, said first and second electrodes being arranged in electrical contact with said pressure sensitive polymer layer in such a way that said first and second electrodes are conductively connected through said pressure sensitive polymer layer if the latter is subjected to pressure exceeding said pressure threshold.

14. A pressure-actuatable switching device according to claim 13, wherein said first electrode is provided by said first sheet element including an electrically conductive region on the side facing the second sheet element.

15. A pressure-actuatable switching device according to claim 13, wherein said first electrode is a flexible electrode sandwiched between said first sheet element and said pressure sensitive polymer layer, said first flexible electrode being in electrical contact with said pressure sensitive polymer layer.

16. A pressure-actuatable switching device according to any one of claims 13 to 15, wherein said second electrode is provided by said second sheet element including an electrically conductive region on the side facing the first sheet element.

17. A pressure-actuatable switching device according to any one of claims 13 to 15, wherein said second electrode is sandwiched between said second sheet element and said pressure sensitive polymer layer.

18. A pressure-actuatable switching device according to claim 13, comprising a shunt electrode separate from said first and second electrodes, said shunt electrode being arranged in electrical contact with said pressure sensitive polymer layer in such a way that said first and second electrodes are conductively connected through said shunt electrode and said pressure sensitive polymer layer if the latter is subjected to pressure exceeding said pressure threshold.

19. A pressure-actuatable switching device according to claim 18, wherein said first and second electrodes are provided by said first sheet element comprising a first electrically conductive region and a second electrically conductive region on the side facing the second sheet element.

20. A pressure-actuatable switching device according to claim 18, wherein said first and second electrodes are flexible electrodes sandwiched between said first sheet element and said pressure sensitive polymer layer, said flexible electrodes being in electrical contact with said pressure sensitive polymer layer.

21. A pressure-actuatable switching device according to claim 19 or 20, wherein said shunt electrode is provided by said second sheet element including an electrically conductive region on the side facing the first sheet element.

22. A pressure-actuatable switching device according to claim 19 or 20, wherein said shunt electrode is sandwiched between said second sheet element and said pressure sensitive polymer layer.

23. A pressure-actuatable switching device according to claim 18, wherein said first and second electrodes are provided by said second sheet element comprising a first and a second electrically conductive regions on the side facing the second sheet element.

24. A pressure-actuatable switching device according to claim 18, wherein said first and second electrodes are sandwiched between said second sheet element and said pressure sensitive polymer layer, said first and second electrodes being in electrical contact with said pressure sensitive polymer layer.

25. A pressure-actuatable switching device according to claim 23 or 24, wherein said shunt electrode is provided by said first sheet element including an electrically conductive region on the side facing the first sheet element.

26. A pressure-actuatable switching device according to claim 23 or 24, wherein said shunt electrode is a flexible electrode sandwiched between said first sheet element and said pressure sensitive polymer layer.

27. A pressure-actuatable switching device according to any one of claims 4 to 27, comprising at least one ventilation channel providing fluid connection of said interstices with surroundings of said pressure-actuatable switching device.

**Fig. 1**

**Fig. 2**

**Fig. 3**

**Fig. 4**

number of print layers

## Fig. 5

## Fig. 6

**Fig. 7**

**Fig. 8**

**Fig. 9**

**Fig. 10**

**Fig. 11**

**Fig. 12**

**Fig. 13**

**Fig. 14**

Fig. 15

Fig. 16

European Patent
Office

**EUROPEAN SEARCH REPORT**

Application Number

EP 06 11 4542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 009, no. 232 (P-389), 18 September 1985 (1985-09-18) & JP 60 088334 A (NIPPON DENSO KK), 18 May 1985 (1985-05-18) | 1-3,13 | INV. G01L1/20 G01L1/18 H01H3/14 H01H13/70 G06F3/033 |
| Y | * abstract * * figures 1-13,18-21 * | 18-26 | |
| X | US 4 317 012 A (ITOH ET AL) 23 February 1982 (1982-02-23) | 1,3,18, 23-25 | |
| Y | * abstract * * figures 1-3,5-7 * * column 1, lines 50-53 * * column 2, lines 9-43 * * column 3, lines 27-58 * * claims 1-5 * | 18-26 | |
| X | US 4 996 511 A (OHKAWA ET AL) 26 February 1991 (1991-02-26) * abstract * * figures 1,10 * * column 2, lines 55-68 * * column 4, line 49 - column 5, line 12 * * claims 1-13 * | 1-17 | |
| A | US 6 121 869 A (BURGESS ET AL) 19 September 2000 (2000-09-19) * abstract * * figure 5 * * column 6, line 64 - column 8, line 24 * | 1-27 | TECHNICAL FIELDS SEARCHED (IPC) G01L H01H G06F B60N |
| A | US 5 431 064 A (FRANZ ET AL) 11 July 1995 (1995-07-11) * the whole document * | 18-26 | |

-/--

The present search report has been drawn up for all claims

| Place of search | Date of completion of the search | Examiner |
|---|---|---|
| Munich | 24 July 2006 | Poizat, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 835 271 A1

| | European Patent Office | EUROPEAN SEARCH REPORT | Application Number EP 06 11 4542 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATENT ABSTRACTS OF JAPAN vol. 014, no. 477 (P-1118), 17 October 1990 (1990-10-17) & JP 02 193030 A (RICOH CO LTD), 30 July 1990 (1990-07-30) * the whole document * ----- | 1-17 | |
| A | US 5 510 812 A (O'MARA ET AL) 23 April 1996 (1996-04-23) * abstract * * column 3, line 11 - column 8, line 18; figures 6,7 * ----- | 1-27 | |
| | | | TECHNICAL FIELDS SEARCHED (IPC) |

The present search report has been drawn up for all claims

| Place of search | Date of completion of the search | Examiner |
|---|---|---|
| Munich | 24 July 2006 | Poizat, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

**ANNEX TO THE EUROPEAN SEARCH REPORT**
**ON EUROPEAN PATENT APPLICATION NO.**                EP 06 11 4542

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2006

| Patent document cited in search report | | Publication date | Patent family member(s) | | Publication date |
|---|---|---|---|---|---|
| JP 60088334 | A | 18-05-1985 | NONE | | |
| US 4317012 | A | 23-02-1982 | DE | 3015634 A1 | 13-11-1980 |
| | | | FR | 2455402 A1 | 21-11-1980 |
| | | | GB | 2049290 A | 17-12-1980 |
| | | | JP | 55143722 A | 10-11-1980 |
| US 4996511 | A | 26-02-1991 | JP | 1282802 A | 14-11-1989 |
| US 6121869 | A | 19-09-2000 | AU | 7370700 A | 24-04-2001 |
| | | | WO | 0122456 A1 | 29-03-2001 |
| US 5431064 | A | 11-07-1995 | US | 5583303 A | 10-12-1996 |
| | | | US | 5578765 A | 26-11-1996 |
| JP 02193030 | A | 30-07-1990 | NONE | | |
| US 5510812 | A | 23-04-1996 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3386067 A
- JP 2002241591 A, Miyadera
- JP 2004013451 A, Tomono and Komatsu
- JP 2003317545 A, Yusa and Miyadera
- RU 2256967, Lachinov and Salazkin
- WO 2005076289 A1
- JP 20022415591 A

### Non-patent literature cited in the description

- Polymer Films as a Material for Sensors. *Sensors and Actuators A,* 1993, vol. 39, 1-6
- **LACHINOV et al.** *Synthetic Metals,* 1993, vol. 57, 5046-51
- **LACHINOV et al.** *Sov. Phys. JETP,* 1992, vol. 75, 99-102
- **LACHINOV et al.** *Synthetic Metals,* 1991, vol. 41, 805-809
- **A. N. LACHINOV.** Poly(phthalidylidenarylene)s: New Effects. - New Horizons of application. *Synthetic Metals,* 1995, vol. 71, 2155-8
- **S. N. SALAZKIN.** Aromatic polymers based on pseudoacid chlorides. *Polymer Science,* 2004, vol. B46, 203-223
- **LACHINOV, A. N.** Polymer films as a material for sensors. *Sensors and Actuators,* 1993, vol. A39, 1-6